Europäisches Patentamt

(19) European Patent Office

Office européen des brevets

(11) Veröffentlichungsnummer: **0 124 094**
**B1**

(12) ## EUROPÄISCHE PATENTSCHRIFT

(45) Veröffentlichungstag der Patentschrift:
18.01.89

(21) Anmeldenummer: 84104717.8

(22) Anmeldetag: 26.04.84

(51) Int. Cl.⁴: **C 08 L  67/02,** C 08 L  27/08,
C 08 L  83/04, C 08 L  1/10,
C 09 J  3/16, C 08 K  5/09,
G 03 C  1/52, B 43 L  1/00

(54) Haftmasse.

(30) Priorität: 02.05.83  DE 3315977

(43) Veröffentlichungstag der Anmeldung:
07.11.84 Patentblatt 84/45

(45) Bekanntmachung des Hinweises auf die Patenterteilung:
18.01.89 Patentblatt 89/3

(84) Benannte Vertragsstaaten:
AT BE CH DE FR GB IT LI NL SE

(56) Entgegenhaltungen:
DE-A- 2 425 806
DE-A- 2 555 783
DE-B- 2 652 942
FR-A- 2 228 009
FR-A- 2 244 788
GB-A- 1 128 837
US-A- 4 157 918

Die Akte enthält technische Angaben, die nach dem
Eingang der Anmeldung eingereicht wurden und die
nicht in dieser Patentschrift enthalten sind.

(73) Patentinhaber: HOECHST AKTIENGESELLSCHAFT,
Postfach 80 03 20, D-6230 Frankfurt am Main 80 (DE)

(72) Erfinder: Hilger, Manfred, Langenberging 74,
D-5503 Konz (DE)
Erfinder: Hultzsch, Günter, Dr. Dipl.-Chem.,
Drususstrasse 61, D-6200 Wiesbaden (DE)
Erfinder: Kelper, Roman, Rathausstrasse 92,
D-6200 Wiesbaden (DE)

ACTORUM AG

**Beschreibung**

Die vorliegende Erfindung betrifft eine Haftmasse zur Verwendung auf einem Polyesterformteil, insbesondere auf einer Folie aus Polyester, aus einem Mischpolyester, gegebenenfalls in Verbindung mit lichtempfindlichen Sustanzen, Füllstoffen und Pigmenten.

Formteile aus linearen Polyestern, vor allem aus Polyethylenterephthalat, besonders in Form von Fasern, Fäden oder Folien, haben sehr grosse Bedeutung erlangt. So werden zum Beispiel Polyesterfolien als Basis für Photofilme, Zeichenfolien oder in Dupliziermaterialien verwendet. Sie zeichnen sich nach der Verstreckung und Fixierung durch besonders hohe mechanische Festigkeiten, chemische Beständigkeit und Dimensionsstabilität aus, die neben anderen Eigenschaften ihre wirtschaftliche Bedeutung verständlich machen.

Ein Problem bei der Herstellung von beschichteten Polyesterfilmen besteht darin, einmal eine gute Haftung zwischen der Trägerfolie und den aufzubringenden Schichten zu erhalten und zum anderen die beschichteten Materialien ohne Verblockung auf- und abwickeln zu können.

In der Diazotypie ist für die Erzeugung von Bildern nach Belichtung unter einer Vorlage mit einer geeigneten UV-Lampe zum Beispiel eine alkalische Entwicklung zur Erzeugung des Diazofarbstoffes an den nicht ausbelichteten Stellen notwendig. Hierbei werden die Folien im alkalischen Milieu Wasser oder Wasserdampf und erhöhten Temperaturen ausgesetzt. Dabei kommt es besonders auf einen fehlerfreien, starken Verbund zwischen Polyesterfolie und aufgebrachter Schicht oder Schichten an.

Die Verankerung von polymeren Stoffen auf Folien, z.B. aus Polyethylenterephthalat, bereitet sehr grosse Schwierigkeiten. Sollen die Schichten ausserdem noch Chemikalien enthalten, wie sie in der Photochemie oder Diazotypie gebräuchlich sind, und Belichtungs- und Entwicklungsprozessen unterworfen werden, bei denen die Haftfestigkeit von Schichten erfahrungsgemäss stark beansprucht wird, müssen die Haftkräfte besonders stark ausgeprägt sein, um den Verbund ohne Defekte zu erhalten. Es hat deshalb nicht an Versuchen gefehlt, Produkte zu entwickeln, die eine verbesserte Haftung auf der Polyesterfolie hervorrufen.

Aus der DE-PS 971 996 (entsprechend GB-PS 700 957) ist zum Beispiel die Verwendung von hochpolymeren Polyestern als haftvermittelnde Schicht bekanntgeworden. Es ist auch bekannt (DE-PS 2 555 783, entsprechend US-PS 4 139 506), Haftmassen auf Polyesterfolien aus einer Mischung aus Mischpolyestern und Polyisocyanat, gegebenenfalls in Verbindung mit lichtempfindlichen und anderen Bestandteilen, zu verwenden, die als Zusatz wenigstens einen Celluloseester, ein Mischpolymerisat des Vinylidenchlorids, ein Mischpolymerisat aus Methylvinylether und Maleinsäureanhydrid oder ein Mischpolymerisat aus Acrylsäure- bzw. Methacrylsäureestern oder als Zusatz Hexamethoxymethylmelamin enthalten, wobei das Verhältnis Mischpolyester zu Zusatz im Bereich von (20 bis 0,5):1 liegt.

Es hat sich jedoch gezeigt, dass bei Verwendung von Polyisocyanaten als Haftschichtelement die Haftfähigkeit sich entweder erst im Laufe einer bestimmten Lagerungszeit entwickelt oder dass die Schichten weniger gut lagerfähig sind, weil sie gegen Feuchtigkeit empfindlich sind oder verkleben können. Erhitzt man die Verankerungsschichten höher, um diesem Nachteil entgegenzuwirken, so können sie vergilben oder eine Unverträglichkeit mit der aufzubringenden lichtempfindlichen Schicht hervorrufen.

Mischpolyester sind für sich allein thermoplastische Stoffe, die bei Wärmebeanspruchung, wie sie bei Entwicklungsprozessen für Kopiermaterialien üblich sind, in unerwünschter Weise ihre Haftkraft verlieren.

Es ist auch bekannt (DE-PS 2 830 003, entsprechend GB-PS 1 568 468), bei einem Zweikomponenten-Diazotypiematerial aus einem Polyethylenterephthalat-Schichtträger und einer hierauf aufgetragenen bindemittelhaltigen Diazotypieschicht als Bindemittel ein haftungsvermittelndes Mischpolymerisat aus Isophthalsäure und/oder Terephthalsäure, einem Glykol mit 2 bis 6 Methylengruppen und/oder Polyoxyalkylenglykol zu verwenden.

Es hat sich jedoch gezeigt, dass diese Schichten nicht in allen Fällen höchsten Belastungen, wie sie zum Beispiel in der Diazotypie üblich sind, entsprechen.

Es war deshalb Aufgabe der Erfindung, eine Haftmasse zur Verwendung auf einem Polyesterformteil, insbesondere auf einer Folie aus Polyester, zu schaffen, die Mischpolyester enthält und gegebenenfalls in Verbindung mit lichtempfindlichen Substanzen, Füllstoffen und Pigmenten eingesetzt werden kann, welche die Nachteile der bekannten Haftvermittler nicht aufweist. Von der Haftmasse wurde erwartet, dass sie verträglich ist mit der gleichzeitig oder später aufbringenden Rezeptur, wie zum Beispiel lichtempfindliche Beschichtungen, dass sie unmittelbar eine gute Haftung aufweist und dass sie bei der Lagerung nicht vergilbt.

Die Lösung dieser Aufgabe geht von einer Haftmasse der genannten Art aus, und sie ist dadurch gekennzeichnet, dass die Haftmasse aus einer Mischung des Mischpolyesters und mindestens einem Mischpolymerisat des Vinylidenchlorids besteht. Vorzugsweise liegt das Gewichtsverhältnis von Mischpolyester zu Mischpolymerisat des Vinylidenchlorids im Bereich von (3 bis 1):1. Von ganz besonderem Vorteil ist die erfindungsgemässe Haftmasse dann, wenn das Gewichtsverhältnis etwa 2:1 beträgt.

Hierdurch wird erreicht, dass mit einer Haftschicht versehene Polyesterformkörper zur Verfügung gestellt werden, die eine sehr gute Haftung vermitteln. Ein weiterer Vorteil ist, dass man die erfindungsgemässe Haftmasse im inline-Verfahren, d.h. vor dem Antrag der nachfolgenden Schicht, aufbringen kann und damit eine kontinuierliche Beschichtungsweise erzielt.

Mit grossem Erfolg können deshalb mit der erfindungsgemässen Haftmasse versehene Folien aus Polyester mit beispielsweise einer lichtempfindlichen Schicht versehen werden. Der Verbund ist unmittelbar nach Beschichten und Trocknen gegeben und erfüllt in hohem Masse die in der Praxis geforderten Haftfähigkeiten.

Die erfindungsgemässe Haftmasse ist dann von besonderer Bedeutung, wenn sie weiterhin einen Celluloseacylester enthält. Bevorzugt verwendet man niedermolekulare Celluloseacetobutyrate und Cellulosepropionate allein oder in Mischung. Das Gewichtsverhältnis von Mischpolyester und Mischpolymerisat des Vinylidenchlorids zu Celluloseacylester liegt vorzugsweise im Bereich von etwa 1:(1 bis 100).

Es hat sich gezeigt, dass hierdurch Haftschichten auf insbesondere Polyesterfolien zur Verfügung gestellt werden können, die, völlig überraschend, höchsten Ansprüchen genügen. Ein guter Verbund, ohne die aus dem Stand der Technik bekannten und geforderten reaktionsfähigen Verbindungen, wie zum Beispiel Polyisocyanate, war nicht zu erwarten.

Polyesterfolien, die mit der erfindungsgemässen Haftschicht versehen sind, eignen sich hervorragend als Schichtträger für Diazomaterialien, die in der lichtempfindlichen Schicht zum Beispiel einen Celluloseacylester als Bindemittel enthalten, oder auch zur Herstellung von Zeichenschichten.

Die erfindungsgemässe Haftschicht wird aus organischer Lösung aufgetragen. Als Lösungsmittel dienen in Verbindung mit Celluloseacylester zum Beispiel Lösungsmittelgemische aus Aceton, Tetrahydrofuran und Methylglykol. Als Lösungsmittel dient auch Methylethylketon, wenn kein Celluloseacylester anwesend ist.

Im Falle der Beschichtung von Folien beträgt das Haftschichttrockengewicht etwa 0,1 bis 1,0 g/m², im Falle, dass Celluloseacylester vorhanden ist, etwa 0,5 bis 3 g/m². Bei einer angenommenen Dichte von 1 entspricht die Schichtdicken von etwa 0,1 bis 1,0 µm bzw. 0,5 bis 3 µm.

Als Mischpolyester werden Polyesterharze eingesetzt, die Mischpolyester aus zum Beispiel Iso- und Terephthalsäure und einem oder mehreren Glykolen darstellen und die unter dem Namen Dynapol[R] oder Dynamit Nobel oder Vitel[R] der Goodyear im Handel erhältlich sind. Sie stellen lineare Polyester dar mit Molekulargewichten bis etwa 20.000, aus Diolen mit 2 bis 8 Kohlenstoffatomen und Dicarbonsäuren mit 4 bis 12 Kohlenstoffatomen. Hierzu gehören Ethylenglykol, Diethylenglykol, Propylenglykol, Butylenglykol, Neopentylglykol, Sebacinsäure, Azelainsäure, Pimelinsäure, Adipinsäure, Glutarsäure, Phthalsäure, Isophthalsäure, Terephthalsäure, alkylierte Phthalsäure. Sie werden allein oder in Mischung verwendet.

Als Mischpolymerisate des Vinylidenchlorids kommen die aus dem Handel unter dem Namen Saran[R] der Dow Chemical bekannten in Frage, die zum Beispiel aus Vinylidenchlorid und Acrylnitril oder Vinylidenchlorid, Vinylchlorid und Acrylnitril in den verschiedensten Gewichtsverhältnissen zusammengesetzt sind, mit Molekulargewichten von 10.000 bis 20.000. Vorzugsweise wird ein Mischpolymerisat aus Vinylidenchlorid und Acrylnitril im Verhältnis 80:20 eingesetzt.

Vorteilhaft enthält die erfindungsgemässe Haftmasse zusätzlich einen Anteil an mehrbasischer Oxycarbonsäure. Es hat sich gezeigt, dass in Haftungsgrenzbereichen hierdurch eine Stabilisierung der Haftung erzielt werden kann. Als solche kommen Verbindungen in Frage, wie Oxymalonsäure, Mesoxalsäure, Apfelsäure, Weinsäure, Oxalessigsäure, Oxymaleinsäure. Vorzugsweise wird als mehrbasische Oxycarbonsäure Citronensäure eingesetzt. Die mehrbasische Oxycarbonsäure kann zum Einsatz kommen von geringen Anteilen bis zu Gewichtsverhältnissen von etwa 1:1, bezogen auf Mischpolyester und Mischpolymerisat des Vinyldidenchlorids.

In weiterer Ausgestaltung der Erfindung enthält die Haftmasse ein Verlaufmittel. Es stellt eine Verbindung auf Basis organisch modifizierter Polysiloxane dar. Hierdurch wird eine hohe Vergleichmässigung der Beschichtung erzielt.

Als Verlaufmittel dienen die im Handel, zum Beispiel unter dem Namen Tegopren[R] der Goldschmidt AG, bekannten. Sie sind in organischen Lösungsmitteln, wie Akoholen, aliphatischen und aromatischen Kohlenwasserstoffen, chlorierten Kohlenwasserstoffen, Ketonen oder Estern löslich. Es sind auch Produkte geeignet, die sowohl in Wasser als auch in organischen Lösungsmitteln löslich sind. Vorzugsweise wir ein in Wasser und organischem Lösungsmittel lösliches Polysiloxan verwendet. Es besitzt Viskositäten im Bereich von 800 ± 150 m Pa · s bei 25 °C.

Es hat sich zur Herstellung von Reprographiematerialien gezeigt, dass der erfindungsgemässen Haftmasse bekannte lichtempflindliche Lacksysteme zur Herstellung von Vesikularfilmen oder von Diazofilmen zugesetzt werden können, bevor die Masse auf den Polyesterschichtträger aufgebracht wird. Die lichtempfindlichen Materialien können jedoch auch nachträglich in die Haftschichten sowohl im in-line- als auch im off-line-Verfahren eingelagert werden, was den verfahrenstechnischen Vorteil hat, dass lichtempfindliche Schichten erhalten werden, die erheblich homogener ausgebildet sind. Dies ist erklärlich aus der Tatsache, dass im Falle des gleichen Bindemittels in Haftmasse und lichtempfindlichem Lacksystem die Bindemittelmenge in letzterem kleiner gehalten werden kann. Das Lacksystem kann dadurch mit höherem Anteil an aktiver Substanz in einer Art Diffusionsbeschichtung aufgetragen werden. Die Viskosität des Lackes liegt durch den geringeren Anteil an Celluloseacylester als Bindemittel dann wesentlich niedriger, so dass der Lack mit einer höheren Beschichtungsgeschwindigkeit aufgetragen werden kann. Gleichzeitig mit dem Antragen wird die Haftmasse angelöst und erzeugt dadurch eine höhere Viskosität des Gesamtlackes, was zum Vorteil hat, dass das Lacksystem mit einer höheren Viskosität in den Trockenkanal eingeführt werden kann. Im Ergebnis erhält man homogenere Schichten als man bisher erzielen konnte.

Als Schichtträger eignen sich Formteile aus Polyester. Vorzugsweise dient als Substrat Polyestermaterial in Folienform, insbesondere in biaxial verstreckter Form.

Die verwendeten Polyesterfolien sind solche aus Polybutylenterephthalat, Mischpolyester, zum Beispiel hergestellt aus Terephthalsäure, Isophthalsäure und Ethylenglykol oder 1,4-Dimethylglykol-cyclohexan, wobei der Isophthalsäureanteil bis zu 50 Molprozent beträgt, oder aus Terephthalsäure und Ethylenglykol und Polyethylenglykol oder aus Naphthalin-2,6-dicarbonsäure, Terephthalsäure und Ethylenglykol. Besonders haben sich Folien aus Polyethylenterephthalat bewährt.

Die Masse kann ausser den genannten Verbindungen noch Füllstoffe und Pigmente, zum Beispiel Titandioxid, Aluminiumoxid, Siliciumdioxid, Silikate oder Antistatika, Farbstoffe usw. enthalten.

Die erfindungsgemässe Haftmasse wird aus organischer Lösung aufgebracht, wobei man sich herkömmlicher Techniken bedient. Auf die Haftschicht können ein oder mehrere weitere Schichten aufgebracht werden, die jede für sich zusätzlich eine Haftmasse enthalten können.

So können Schichten aufgetragen werden, die auch mit anorganischen Pigmenten (Aluminiumoxid, Titandioxid, $SiO_2$, Silikate) gefüllt sind. Auf diese Weise erhält man Oberflächen, die eine gute Beschreibbarkeit, zum Beispiel mit Bleistift oder Plastikminen, besitzen. Ferner können die mattierten Oberflächen auf bekanntem Wege mit Diazoniumsalzlösungen sensibilisiert werden, mit einem für Tuschebeschriftung geeigneten Strich versehen oder als Tonerbildträger in elektrophotographischen Kopiergeräten eingesetzt werden.

Bei Bedarf kann die erfindungsgemässe Haftmasse eingefärbt oder mit Partikeln versehen werden, die das Blocken beim Wickeln der Folien verhindern oder die Verklebungsneigung bei Wärme reduzieren. Ferner kann eine pigmentierte Haftmasse direkt als mattierte Oberfläche für Zeichen oder Lichtpausmaterialien dienen. Die Mattierungsschicht wird dann vorzugsweise im Bereich von 3 bis 10 g/m² angetragen.

Durch die gute Haftung der Schicht entfällt eine Substrierung der als Schichtträger verwendeten Polyesterfolie.

Die Haftung auf dem Schichtträger, wie die Haftung der Schichten untereinander, erweisen sich als ausgezeichnet, wobei dies sowohl für die Trokkenhaftung als auch für die Nasshaftung gilt.

Die erfindungsgemässe Haftschicht auf Polyesterformteilen, insbesondere auf Folien aus Polyester, kann beispielsweise für lichtempfindliche Filmmaterialien, für die Oberflächenmodifizierung der Folien, für die kosmetische Verbesserung der Oberfläche, für die antistatische Ausrüstung, für die nachträgliche Einfärbung oder auch für den Ausgleich von Oberflächenfehlern, wie Stippen oder Kratzern, erfolgen. Entsprechend ausgerüstete Polyesterfolien können auch als Bildträger in der Elektrophotographie verwendet werden.

Die Erfindung wird anhand der folgenden Beispiele näher erläutert, ohne dass jedoch eine Einschränkung hierauf bestehen soll.

Beispiel 1

Auf eine 125 µm dicke glasklare Folie aus biaxial verstrecktem Polyethylenterephthalat wird eine Lösung mit folgender Zusammensetzung aufgetragen: 1,15 g Mischpolyester (Dynapol$^R$ L 206) und 0,65 g Mischpolymerisat (Saran$^R$ F 310) werden unter Rühren in 98,2 g Methylethylketon gelöst. Die Lösung trocknet nach dem Auftrag zu eiem klaren Film von 250 mg/m² Stärke auf. Die so hergestellte, mit einer Haftschicht versehene Folie besitzt hohe Haftmassenkräfte gegenüber der als Basisfolie vorliegenden Polyesterfolie. Sie dient für die nachfolgenden Beschichtungslösungen (Beispiele 2 und 3).

Beispiel 2

Eine nach Beispiel 1 substrierte Polyesterfolie wurde mit einer Lösung folgender Zusammensetzung beschichtet: 12,7 g Mischpolymerisat aus Vinylidenchlorid-Acrylnitril im Gewichtsverhältnis von 30:70 und 3,3 g Mischpolymerisat aus Vinylidenchlorid-Acrylnitril im Gewichtsverhältnis von 80:20 wurden unter Zusatz von 0,8 g Diazoniumsalz, 0,7 g Citronensäure, Schlupfmittel und Stabilisatoren unter Rühren in 83 g Methylethylketon gelöst. Ein so hergestelltes Material kann als Vesikularfilm dienen. Zur Prüfung der Haftfähigkeit des beschichteten Films wurde der Film UVbelichtet und die Schicht gemäss DIN 53151 mit einem Gitterschnittprüfgerät, Typ GS 30, angeritzt. Danach wurde ein Klebeband auf die markierten Stellen des Films gepresst und anschliessend ruckartig wieder abgezogen. Die Haftung des Vesikularfilms auf der nach Beispiel 1 erfindungsgemäss vorbehandelten Polyesterfolie ist sehr gut. Ohne Vorbehandlung der Polyesterfolienoberfläche ist die Haftung mangelhaft.

Beispiel 3

Es wurde eine Lösung zur Foliensubstrierung hergestellt, die, wie im Beispiel 1 beschrieben, als Haftmasse zum Einsatz kam. Zur Prüfung der Haftfähigkeit der Substrierung wurde ein Mikrofilmlack mit Zusatz von Cellulosepropionat als Bindemittel und mit für die Erzeugung eines blauen Farbstoffes üblichen Diazoverbindung, Kuppler und Stabilisator in 3 bis 5 µm dicker Schicht aufgebracht und bei 105 °C 2 Minuten getrocknet. Zur Prüfung der Haftfähigkeit wurde der Film mit ammoniakalischem Wasserdampf bei höherer Temperatur in einer Lichtpausmaschine entwickelt und nach dem im Beispiel 2 beschriebenen Haftungstest überprüft. Die Haftung war sehr gut. Ohne erfindungsgemässen Haftvermittlungsvorstrich zeigt der Film keine Haftung auf der Polyesterfolie.

Beispiel 4

Auf eine biaxial verstreckte Polyesterfolie von 175 µm Dicke wurde folgende Lösung aufgebracht: 0,234 g Mischpolyester, hergestellt aus Terephthalsäure, Neopentylglykol und Ethylenglykol, mit einem mittleren Molekulargewicht von 18.000 bis 20.000, 0,130 g Mischpolymerisat aus Vinylidenchlorid und Acrylnitril im Verthältnis 80:20, 10,0 Celluloseacylester, mit einem Propionylgehalt von ca. 45% und einem Acetylgehalt von ca. 3,5%, bei einer Viskosität von 159 bis 240 mPa · s gemäss DIN 53015, wurden in einem Lösungsmittelgemisch von 185 g Tetrahydrofuran, 48,5 g Methylglykol und 5 g Methylethylketon gelöst. Die Lösung mit einer Vikosität von etwa 5 bis 8 mPa · s trocknet nach Auftrag auf Polyesterfolie zu einem klaren Film von 3 g/m$^2$, entsprechend etwa 3 µm Dicke, auf. Diese Haftschicht zeigte eine sehr gute Haftung zur Polyesterfolie.

Beispiel 5

Auf die nach Beispiel 4 vorbeschichtete Polyesterfolie mit einer etwa 3 µm dicken Haftmasse aus Mischpolyester, Mischpolymerisat des Vinylidenchlorids und Celluloseester wurde eine Deckschicht mit folgender Zusammensetzung aufgebracht: 0,1 g Sulfosalicylsäure, 1,3 g Blaukuppler, wie 2,3-Dihydroxynaphthalin-6-(4'-chlorphenyl)-sulfonsäureamid, 2,3 g Diazoniumsalz, wie 4-Morpholino-2,5-dibutoxy-benzoldiazonium-fluoborat,
3,5 Celluloseester, wie in Beispiel 4, 50 mg Verlaufmittel auf Basis organisch modifizierten Polysiloxans (Tegopren$^R$) werden in einem Lösungsmittelgemisch von 94,9 g Aceton, 26,7 g Tetrahydrofuran und 28,9 g Methylglykol zu einer Lösung mit einer Viskosität von etwa 3 bis 5 mPa · s gelöst. Nach Trocknen der Deckschicht über 2 Minuten bei 105 °C ergab sich eine Schicht mit einem Antragsgewicht von etwa 7 bis 8 g/m$^2$. Der Antrag konnte mit einer Beschichtungsgeschwindigkeit von 30 bis 40 m/min, gegenüber üblichen Beschichtungsgeschwindigkeiten von etwa 20 m/min, erfolgen. Die Haftung der Deckschicht war gut. Die hergestellte Schicht erwies sich als homogen.

Beispiel 6

Auf eine biaxial verstreckte Polyesterfolie von 125 µm Dicke als Schichtträger wurde folgende Lösung aufgebracht:
7,8 g Celluloseacylester mit einem Propionylgehalt von ca. 45% und einem Acetylgehalt von ca. 3,5%, bei einer Viskosität von 150 bis 240 mPa · s nach DIN 53015, und 3,7 g einer in Beispiel 5 genannten Diazorezeptur aus Diazoniumsalz, Kuppler und Stabilisator, zur Erzeugung eines blauen Farbstoffes, wurden in einem Lösungsmittelgemisch von 94,4 g Aceton, 26,7 g Tetrahydrofuran und 28,9 g Methylglykol gelöst. Zu diesem Diazo-Lack wurden 4,1 g einer 1,82%igen Lösung aus einem Mischpolyester (Dynapol$^R$) und einem Mischpolymerisat (Saran$^R$)), im Verhältnis 2:1, gelöst in Methylethylketon, unter Rühren hinzugegeben.
Die Haftmasse, die gleichzeitig eine Diazolackschicht darstellt, war nach der Behandlung mit Wasserdampf und Ammoniak in ihrer Schichthaftung, nach dem in Beispiel 2 beschriebenen Haftungstest, sehr gut. Ohne Zusatz von Mischpolyester und Mischpolymerisat zeigt die aufgetragene Schicht keine Haftung.

Beispiel 7

In die unter Beispiel 6 beschriebene Lösung wurden 50 mg Verlaufmittel (Tegopren$^R$ 1007) hinzugegeben. Es zeigte sich eine bessere Vergleichmässigung der Schicht und eine dadurch bedingte stabilere Haftfähigkeit.

Beispiel 8

Auf eine 125 µm starke glasklare Folie aus biaxial verstrecktem Polyethylterephthalat wurde eine Lösung folgender Zusammensetzung aufgetragen:
4,0 g Celluloseacylester mit einem Propionylgehalt von ca. 45% und einem Acetylgehalt von ca. 3,5%, bei einer Viskosität von 150 bis 240 mPa . s, nach DIN 53015, 4,0 g Celluloseacylester mit einem Propionylgehalt von ca. 45% und einem Acetylgehalt von ca. 3,5%, bei einer Viskosität von 2.200 bis 3.800 mPa · s, nach DIN 53015, 0,15 g Sulfosalicylsäure, 1,95 g Kuppler und 3,42 g Diazoniumsalz, wie in Beispiel 5 angegeben, wurden in einem Lösungsmittelgemisch von 94,9 g Aceton, 26,7 Tetrahydrofuran und 28,9 g Methylglykol gelöst. Zu diesem Diazolacksystem wurden 16,5 g einer 1,82%igen Lösung aus einem Mischpolyester und einem Mischpolymerisat des Vinylidenchlorids im Verhältnis 2:1, gelöst in Methylethylketon, unter Rühren hinzugegeben. Nach Hinzugabe von 50 mg Verlaufmittel und 360 mg Citronensäure wurde die klare Lösung auf die Polyethylenterephthalatfolie aufgebracht und getrocknet. Nach der Entwicklung im ammoniakalischen Wasserdampfmilieu zeigte die glasklare Diazo-Haftmassenschicht eine sehr gute Haftung. Ohne Hinzugabe der Citronensäure zeigte die Schicht bei extremer Beanspruchung, wie zum Beispiel durch Kontaktieren mit extrem hoher Luftfeuchtigkeit, eine etwas schlechtere Nass- und Trockenhaftung, wobei man die Nasshaftung durch Kontaktieren von Wasserdampf vor dem Trockenhaftungstest überprüfte.

Beispiel 9

Auf eine 75 µm dicke, biaxial verstreckte Polyethylenterephthalatfolie wurde eine Lösung folgender Zusammensetzung aufgetragen.
4 g Mischpolyester (Danypol$^R$ L 206),
3 g Mischpolymerisat (Saran$^R$ F 310),
120 g Methylglykolacetat.
Die Lösung wurde bei 115 °C zu einem Film von etwa 600 mg/m$^2$ getrocknet. Die Haftschicht wurde mit einem 9 µm starken Cellulosepropionat-Film aus Aceton und Alkoholen beschichtet, der 35% eines Gemisches anorganischer Pigmente einer mittleren Korngrösse von 4,5 µm enthielt. Als Cellulospropionat diente ein Ester mit einem Propionylgehalt von 45% und einer Viskosität von 200 mPa · s nach DIN 53015. Das Pigmentgemisch war aus Aluminiumoxid, synthetisiertet Kieselsäure, Silikat und Titandioxid aufgebaut. Der auf diese Art mattierte Film liess sich mit Bleistift-oder Plastikminen gut beschriften. Ferner konnte dieser Film in elektrophotographischen Kopiergeräten als Träger für Tonerbilder verwendet werden.

Zur Prüfung der Alterungsbeständigkeit des Mattlackes wurde ein Muster 6 Tage bei 100 °C und 50% relativer Feuchte gelagert. Die Lackhaftung war nach dem in Beispiel 2 beschriebenen Gittertest nach DIN 53151 einwandfrei.

## Beispiel 10

Der nach Beispiel 9 mattierte Film wurde mit der zur Erzeugung eines braunen Farbstoffes üblichen Lösung aus Diazoverbindung, Kupplern und Stabilisierungszuschlägen beschichtet und bei 100 °C getrocknet.

Die Lackhaftung nach Entwickeln des Materials in einem Lichtpausgerät nach dem Trockenkopierverfahren war sehr gut.

Parallel dazu wurde der gleiche Mattlack und die gleiche Diazo-Sensibilisierungslösung auf eine Folie aufgetragen, die mit einer Haftvermittler-Lösung beschichtet war, die neben der Zusammensetzung von Beispiel 9 zusätzlich 1,5 g eines Diisocyanats, 75%ig in Butylacetat (Desmodur$^R$ L 75) enthielt (in Anpassung an die Lehre nach DE-PS 2 555 783). Die Lackhaftung war bei diesem zweiten Muster (Vergleichsmuster) ebenfalls sehr gut.

Nachdem beide Muster 3 Tage bei 55 °C und 35% relativer Feuchte gelagert und anschliessend belichtet und entwickelt worden waren, zeigte das Vergleichsmuster in dem ausbelichteten Bereich eine stärkere Verfärbung als das Muster des erfindungsgemässen Haftvermittlers.

## Beispiel 11

Auf eine 75 μm starke biaxial verstreckte Polyethylenterephthalafolie wurde folgende Lösung aufgetragen:

    5 g eines linearen, gesättigten hydroxylgruppenhaltigen Polyesterharzes (Dynapol$^R$ LH 812),
    3 g ketonlösliches Mischpolymerisat des Vinylidenchlorids mit Acrylnitril (Saran$^R$ F 310),
140 g Aceton,
  14 g 3-Methoxy-n-butylacetat.

Nach Trocknen zu einem Film von 0,5 g/m² Stärke wurde die Haftmasse wie in Beispiel 1 mit einem Mattlack beschichtet und 3 Minuten bei 110 °C getrocknet. Die Lackhaftung war gut. Dagegen haftet die Mattierungsschicht schlecht, wenn auf den Zusatz des ketonlöslichen Vinylidenchloridcopolymeren verzichtet wird.

## Beispiel 12

Wie im Beispiel 11 wurde auf eine 125 μm starke Polyethylenterephthalatfolie eine Lösung folgender Zusammensetzung aufgetragen:

  13 g lineares hydroxylgruppenhaltiges Polyesterharz (Dynapol),
    5 g Vinylidenchloridacrylnitril-Copolymerisat (Saran$^R$ F 310),
680 g Aceton,
  80 g Methanol.

Die Schicht wurde zu einem Trockengewicht von 0,22 g/m² aufgetragen und bei 120 °C getrocknet. Auf diese Haftmasse wurde ein Mattlack aus

    8 g Celluloseester (Cellit$^R$ PR 500, Bayer),
    2 g Vinylacetat-Copolymeres (Mowilith$^R$ 70, Hoechst),
    5 g anorganische Pigmente (Satintone Spezial, Bayertitan RFD)
 70 g Aceton,
 20 g Alkohol beschichtet, so dass eine Lackstärke von ca. 9 μm erzielt wurde. Zur Prüfung der Lackhaftung nach Feuchtigkeitseinfluss wurde eine Probe des mattierten Filmes 24 Stunden in Wasser gelagert. Nach Abtrocknen der Oberfläche war die Lackhaftung einwandfrei.

## Beispiel 13

Eine pigmentierte Haftmasse folgender Zusammensetzung:

 50 g Polyesterharz (Dynapol LH 812),
 45 g Celluloseacetopropionat (Mischung aus CAP 482-20 und CAP 482-0.5),
 15 g Vinylacetat-Copolymer (Mowilith$^R$ 70),
 10 g Vinylidenchlorid-Copolymer (Saran$^R$ F 310),
 30 g kieselsäurehaltige Pigmente mit einer mittleren Teilchengrösse von 4 μm,
600 g Aceton,
170 g Alkohol-Gemisch wude auf eine 125 μm starke biaxial verstreckte Polyesterfolie so aufgetragen, dass nach Trocknen bei 130 °C eine Lackshicht von 9 g/m² entstand. Diese Schicht, in der die erfindungsgemäss beanspruchte Haftmasse mit der Mattierungsschicht kombiniert war, haftet einwandfrei und kann als Tonerbildträger für elektrophotographische Kopiergeräte verwendet werden.

## Patentansprüche

1. Haftmasse zur Verwendung auf einem Polyesterformteil, insbesondere auf einer Folie aus Polyester, aus einem Mischpolyester, gegebenenfalls in Verbindung mit lichtempfindlichen Substanzen, Füllstoffen und Pigmenten, dadurch gekennzeichnet, dass sie aus einer Mischung des Mischpolyesters und mindestens einem Mischpolymerisat des Vinylidenchlorids im Gewichtsverhältnis im Bereich von (3 bis 1) : 1 besteht.

2. Haftmasse nach Anspruch 1, dadurch gekennzeichnet, dass das Mischpolymerisat des Vinylidenchlorids ein Copolymer aus Vinylidenchlorid und Acrylnitril ist.

3. Haftmasse nach Anspruch 1 oder 2, dadurch gekennzeichnet, dass sie Celluloseacylester enthält.

4. Haftmasse nach Anspruch 3, dadurch gekennzeichnet, dass der Celuloseacylester niedermolekulares Celluloseacetobutyrat oder Cellulosepropionat ist oder aus Mischungen dieser Verbindungen besteht.

5. Haftmasse nach Ansprüchen 1 bis 4, dadurch gekennzeichnet, dass das Gewichstverhältnis von Mischpolyester und Mischpolymerisat des Vinylidenchlorids zu Celluloseacylester im Bereich von etwa 1 : (1 bis 100) liegt.

6. Haftmasse nach Ansprüchen 1 bis 5, dadurch gekennzeichnet, dass sie zusätzlch mehrbasische Oxycarbonsäure enthält.

7. Haftmasse nach Anspruch 6, dadurch gekennzeichnet, dass als Oxycarbonsäure Citronensäure vorhanden ist.

8. Haftmasse nach Ansprüchen 1 bis 7, dadurch gekennzeichnet, dass sie ein Verlaufmittel enthält.

9. Haftmasse nach Anspruch 8, dadurch gekennzeichnet, dass sie als Verlaufmittel eine Verbindung auf Basis eines organisch modifizierten Polysioxans enthält.

10. Verwendung der Haftmasse nach Ansprüchen 1 bis 9 in lichtempfindlichen Lacksystemen zur Herstellung von Diazomaterialien.

11. Verwendung der Haftmasse nach Ansprüchen 1 bis 9 zur Herstellung von Zeichenschichten.

**Claims**

1. Adhesive composition which is suitable for use on a shaped part of polyester, in particular a polyester film, and comprises a copolyester, if appropriate in combination with light-sensitive substances, fillers and pigments, characterized in that said adhesive composition is composed of a mixture of the copolyester and at least one copolymer of vinylidene chloride, in a weight ration of 3 : 1 to 1 : 1.

2. Adhesive composition as in Claim 1, characterized in that the copolymer of vinylidene chloride is a copolymer of vinylidene chloride and acrylonitrile.

3. Adhesive composition as in Claims 1 and 2, characterized in. that a celluose acyl ester is contained therein.

4. Adhesive composition as in Claim 3, characterized in that the cellulose acyl ester is a low-molecular-weight cellulose acetobutyrate or cellulose propionate or is a mixture of these compounds.

5. Adhesive composition as in Claims 1 to 4 , characterized in that the weight ratio of copolyester and copolymer of vinylidene chloride to cellulose acyl ester is within a range of between about 1 : 1 and 1 : 100.

6. Adhesive composition as in Claims 1 to 5, characterized in that it additionally contains a polybasic oxycarboxylic acid.

7. Adhesive composition as in Claim 6, characterized in that the oxycarboxylic acid is citric acid.

8. Adhesive composition as in Claims 1 to 7, characterized in that it contains a levelling agent.

9. Adhesive composition as in Claim 8, characterized in that the levelling agent is a compound based on an organically modified polysiloxane.

10. Use of the adhesive composition as in Claims 1 to 9 in light-sensitive lacquer systems for the production of diazo materials.

11. Use of the adhesive composition as in Claims 1 to 9 for the production of drafting layers.

**Revendications**

1. Matière adhésive à utiliser sur un élèment formé en polyester, en particulier sur une feuille de polyester, à base d'un copolyester, éventuellement en association avec des substances photosensibles, charges et pigments, caractérisée en ce qu'elle est constituée d'un mélange du copolyester et d'au moins un copolymère du chlorure de vinylidène, en un rapport pondéral dans la plage de 3 : 1 à 1 : 1.

2. Matière adhésive selon la revendication 1, caractérisée en ce que le copolymère du chlorure de vinylidène est un copolymère de chlorure de vinylidène et acrylonitrile.

3. Matière adhésive selon la ravendication 1 ou 2, caractérisée en ce qu'elle contient un ester acylique de la cellulose.

4. Matière adhésive selon la revendication 3, caractérisée en ce que l'ester acylique de la cellulose est un acétobutyrate de cellulose ou propionate de cellulose à bas poids moléculaire, ou consiste en un mélange de ces composés.

5. Matière adhésive selon les revendications 1 à 4, caractérisée en ce que le rapport pondéral du copolyester et du copolymère du chlorure de vinylidène à l'ester acylique de la cellulose est dans la plage d'environ 1 : 1 à 1 : 100.

6. Matière adhésive selon les revendications 1 à 5, caractérisée en ce qu'elle contient en outre un polyacide hydroxycarboxylique.

7. Matière adhésive selon la revendication 6, caractérisée en ce que de l'acide citrique est présent en tant qu'acide hydroxycarboxylique.

8. Matière adhésive selon les revendications 1 à 7, caractérisée en ce qu'elle contient un agent d'étalement.

9. Matière adhésive selon la revendication 8, caractérisée en ce qu'elle contient en tant qu'agent d'étalement un composé à base d'un polysiloxane organique modifié.

10. Utilisation de la matière adhésive selon les revendications 1 à 9, dans des systèmes de vernis photosensibles pour la production de matériaux diazo.

11. Utilisation de la matière adhésive selon les revendications 1 à 9, pour la production de couches à dessin.